# EUROPEAN PATENT APPLICATION

(11) **EP 4 821 801 A1**
(43) Date of publication of application: **14.10.2026**
(21) Application number: 25169441.0
(22) Date of filing: 09.04.2025
(51) Int. Cl.: B62D 25/08, B62D 29/00

(54) **REAR PART STRUCTURE FOR A VEHICLE**

(71) Applicant: Volvo Car Corporation, 405 31 Göteborg (SE)
(72) Inventor: PETTERSSON, Lars, 40531 Göteborg (SE); SVÄRD, Fredrik, 40531 Göteborg (SE); CLARK, Austen, 40531 Göteborg (SE)
(74) Representative: Kransell & Wennborg KB

(57) **Abstract**

The disclosure relates to a rear part structure (10) for a vehicle, wherein the rear part structure (10) comprises two side member portions (20) located opposite of one another, wherein each side member portion (20) comprises a first segment (21), wherein at least one of the first segments (21) comprises first ribs (22) extending with varying height (H) along a width (W) of its side member portion (20), the ends (22c) of the first ribs (22) forming a spring seat plane (23) for a coil spring unit (50), the spring seat plane (23) being angled in relation to the extension in height (H) of the first ribs (22).

## Description

### TECHNICAL FIELD

The present disclosure relates to a rear part structure for a vehicle and a vehicle.

### SUMMARY

Vehicle bodies can comprise several different structures, which may be attached to one another. One of these structures is the rear part structure, which is generally located in the rear end of a vehicle. Typically, the rear part structure is being inter alia used for a trunk of the vehicle, where the rear part structure supports a luggage compartment floor inside the trunk. Luggage or other loads can be placed on the luggage compartment floor inside the trunk and is consequently supported by the rear part structure. The rear part structure however can have many more parts attached thereto, such as, for example, shock absorbers or generally a wheel suspension, batteries, and so on. The rear part structure may be attached to further structures of the vehicle body.

The rear part structure may comprise side members or side rails, which may be formed as beams and attached further to other structures of the vehicle body, such as a door frame structure of the vehicle body. A bottom side member wall of the side members may be advantageously used to attach a coil spring unit of a wheel suspension thereto.

Advantageously, at least the side members or the overall rear part structure may be casted as a single piece. When die casting the side members or the rear part structure, a certain draft angle must always be used to allow release of the die tools used to form the side members after casting.

Due to the draft angles, opposite side member walls of the side members may be angled, including the one which may be used to attach the coil spring unit thereto. This inclination of the bottom side member wall may make the attachment to the coil spring unit difficult. Specifically, the coil spring unit may be requiring a spring seat plane at the bottom side wall that has an inclination that is opposed to the one that the casting process provides.

The problem is at least partially solved or alleviated by the subject matter of the independent claims of the present disclosure, wherein further examples are incorporated in the dependent claims.

According to a first aspect, there is provided a rear part structure for a vehicle or a vehicle body of a vehicle, wherein the rear part structure comprises two side member portions located opposite of one another, wherein each side member portion comprises a first segment, wherein at least one of the first segments comprises first ribs extending with varying height along a width of its side member portion, the ends of the first ribs forming a spring seat plane for a coil spring unit, and the spring seat plane being angled in relation to the extension in height of the first ribs.

Accordingly, the rear part structure is provided with an angled spring seat plane for optimal arrangement or attachment of the coil spring unit thereat by a first segment with a rib structure comprising ribs of varying heights along the width of the side member portion. By providing the side member with such first segment, only a limited space is used at the side member and relatively little weight is added to the side member. This is important because the side member may only occupy a limited space inside the rear part structure due to other adjacent parts such as wheel and wheel suspension, and potentially due to the manufacturing method for the side member portions or rear part structure, such as but not limited to die casting. Accordingly, the side member's load transfer capabilities may be maintained, and the limited space can be utilized effectively and with little added weight due to the rib structure. Specifically, the first ribs may not only provide the angled spring seat plane for the spring coil unit but also provide structural reinforcement at the bottom side wall of the side member for increasing the load transfer capabilities as main purpose of the side member. The first ribs thereby increase the overall performance and packaging of the rear part structure.

More specifically, the side members may be used for transferring loads along a rear floor in a vehicle's longitudinal extension. As an example, during a rear crash, the forces that are exerted on the vehicle may travel from a bumper, which may be attached by one or more rear extruded parts to the rear part structure, along the side members and continue forwards in the vehicle. As the design space for the side member in this area is very limited due to adjacent moving parts, such as the wheel and wheel suspension, the space for the side member is very limited. For safety reasons, the side member should be very stiff to prevent deformation and cracks. At the same time, requirements with respect to Noise, Vibration and Harshness as well as requirements on the side of the wheel suspension and the manufacturing process, such as die casting, need to be fulfilled.

The rear part structure may generally form a rear part of the vehicle body. Specifically, a bumper may be attached to the rear part structure. The rear part structure may be part of a trunk or generally a compartment of the vehicle or, in other words, form at least partially a trunk or compartment of the vehicle, in particular a support structure for the trunk such that luggage or other loads can be supported and consequently transported in the rear of the vehicle.

In an example, the rear part structure may further comprise a base portion and two wheelhouse portions for partially housing a wheel therein, wherein the base portion extends along the width of the side member portions and between the two wheelhouse portions, and wherein the side member portions extend in length transverse to the extension of the base portion between the two wheelhouse portions. The wheelhouse portions may be located at opposite ends of the rear part structure, in particular of the base portion. The wheelhouse portions may generally comprise a convex or bulge shape, which may be extending with its convex or bulge shape towards the base portion. Also, the wheelhouse portions may generally have an at least partially round or circular circumference or perimeter. Thereby, the wheels of the vehicle can be at least partially received within a space formed by the convex or bulge shape and within the at least partially round or circular perimeter of the wheelhouse portions. Each one of the wheelhouse portions may comprise a shock absorber segment for receiving a shock absorber. A floor support structure can be supported in between the wheelhouse portions and/or on the base portion. The floor support structure may be configured to support the luggage compartment floor thereon. At least one or two side members or side rails may be extensions of each wheelhouse portions or arranged adjacent thereto. Specifically, the at least one or both side members may extend from or at each one of the wheelhouse portions and in parallel to one another.

In an example, the height of the first ribs may increase along the width of its side member portion and in a direction from an adj acent wheelhouse portion to an opposite wheelhouse portion of the two wheelhouse portions. In other words, the height of the first ribs may increase along the extension of the side member portion in width. Specifically, the height of the first ribs increases towards an opposite or distant wheelhouse portion and away from an adjacent or close wheelhouse portion. Thereby, a spring seat plane which is outwardly angled for arrangement of the coil spring unit thereat is provided.

In an example, the height of the first ribs may constantly increase along the width of its side member portion. Thereby, a constantly angled or sloped spring seat plane may be provided for the coil spring unit.

In an example, the first ribs may comprise circumferential ribs extending circumferentially around a center of the first segment. Additionally, the first ribs may comprise radial ribs extending radially between the circumferential ribs and the center. For example, there may be two, three or more circumferential ribs of different diameter in extension. The radial ribs may extend between all or some of the circumferential ribs, thereby connecting them with one another. Thereby, a substantially circular or generally round first segment formed by the first ribs may be provided for an optimal arrangement of the coil spring unit thereat.

In an example, each side member portion may further comprise a second segment, wherein at least one second segment comprises second ribs extending at least along a length of its side member portion. These second ribs may provide load carrying capabilities and thereby reinforce the side member portion, specifically a side member wall thereof. Additionally, these ribs may hep guide the flow of material such as metal, e.g. aluminum, during a die casting process. The second ribs may generally or predominantly be of the same height or of varying height. For example, a varying height of the second ribs may be provided for structural reinforcement of certain locations of the second segment, where this may be desired.

In an example, the first segment and the second segment may be located on a bottom side of the side member portions. The second ribs may be connected to the first ribs. Thereby, the first ribs and second ribs together provide additional reinforcement at a bottom side or underside of the side member portions. Specifically, load may be carried along both, the first ribs and the second ribs, thereby advantageously using the first ribs for the coil spring unit attachment and additionally for structural reinforcement together with the first ribs.

In an example, the second ribs may comprise longitudinal ribs extending predominantly along the length of the side member portion. Predominantly means that the longitudinal ribs extend more in length than in a direction perpendicular thereto, specifically along the width of the side member portions. Further, the second ribs may comprise transverse ribs extending predominantly transverse to the length of the side member portion and in between the longitudinal ribs. Predominantly means that the transverse ribs extend more in a direction transverse to the length, specifically along the width of the side member portions, than along the length. The longitudinal ribs may be extending substantially in parallel to one another. Specifically, the first and second segments or generally the bottom side wall of the side member portion may be a lengthy wall, along which the longitudinal ribs may be extending, substantially along the full width of the bottom side wall or side member portion. In between the longitudinal ribs, the first ribs may be arranged, which may be connected to the longitudinal ribs.

In an example, the spring seat plane may be angled with an angle in the range of 2° to 10° in relation to the extension in height of the first ribs. In particular, the angle may be in the range of 3° to 9°, further in particular in the range of 4° to 8°. For example, the angle may be approximately 6°. This may provide for an optimally angled spring seat plane for arranging the coil spring unit thereat.

In an example, the side member portions may comprise three side member walls forming a rectangular cross-section with an open side. In other words, the three side member walls may form a substantially C-shaped cross section. The open side may be open due to the manufacturing process of the rear part structure, for example when using a horizontally inserted die tool during a die casting process and retrieving it after the side member portion was casted.

In an example, two opposite side member walls of the side member walls may comprise a draft angle. The draft angle on the side member walls may refer to a taper or inclination applied to the side member walls of the side member during casting. This angle ensures that a corresponding die tool can be smoothly ejected from the side member portion after solidification of the metal material. The draft angle may be measured relative to an axis of a die cavity formed by the die tools, which may be perpendicular to a parting line of the die or, in other words, mold.

In an example, one of the two opposite side member walls may comprise the first segment with the first ribs arranged thereon. Specifically, the bottom side member wall may be comprising the first segment and have on a bottom side or underside thereof, arranged the first ribs thereat or thereon.

In an example, the coil spring unit may comprise a spring seat and a coil spring, wherein the spring seat is arranged at the spring seat plane. The spring seat may be structural component configured to support and position the coil spring, e.g., within a strut or shock absorber assembly but not necessarily. Generally, different types of wheel assemblies may be used, where the spring and shock absorber may be mounted together in an assembly such as in a MacPherson strut or as different components such as in a multi-link suspension. The spring seat can ensure the proper function of the suspension system by securely holding the coil spring in place and maintaining its alignment. Specifically, the spring seat may be configured to accommodate an angled positioning of a coil spring. This can that the coil spring can effectively absorb shocks and maintain vehicle stability. The spring seat may for example comprise an isolator to reduce noise, vibration, and harshness. The isolator may for example be made from rubber or similar materials.

In an example, the rear part structure may be a monolithically casted structure or, in other words, casting. All portions and members of the rear part structure may be integrally designed with one another, meaning that all these portions and members are part of the one-piece or monolithic structure of the rear part structure. The rear part structure may be made from one single material, specifically a metal, e.g., aluminum or an aluminum alloy. Such aluminum casting may be made entirely from aluminum or can comprise aluminum, e.g., predominantly aluminum, and other materials, specifically metals. In particular, the rear part structure may be advantageously casted from metal, specifically as a single part in the form of a mega casting. For example, for the mega casting, a High-Pressure Die Casting (HDPC) process may be used, where the molten metal, such as but not limited to aluminum, is pushed into a die or, in other words, mold. This die consists of die tools that are pressed together and sealed just before the molten metal is pushed in. After the metal is pushed in, the tools are retracted, and the die opens again, and the casted metal rear part structure can be removed from the open die.

According to a second aspect, there is provided a vehicle or a vehicle body for a vehicle comprising the rear part structure of the first aspect of this disclosure and at least one coil spring unit arranged at the at least one spring seat plane.

For example, the vehicle may be a car or automobile. Specifically, the vehicle may be a passenger car. For example, the vehicle may be an electric vehicle. As electric vehicle, the battery inside the vehicle may be a traction battery. Further, the electric vehicle may comprise an electric propulsion system, which includes the battery, and an electric motor coupled to each other. The electric vehicle may for example be a battery electric vehicle, a hybrid electric vehicle, or a fuel cell vehicle.

It is noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a perspective partial view on a rear part structure;
- Figure 2: shows a front view on a part of the rear part structure of Fig. 1;
- Figure 3: shows a detailed view on a side member portion of the rear part structure of Fig. 1; and
- Figure 4: shows a bottom view on the side member portion of the rear part structure of Fig. 3.

### DETAILED DESCRIPTION

The Figures are merely schematic representations and serve only to illustrate examples of the disclosure. Identical or equivalent elements are in principle provided with the same reference signs.

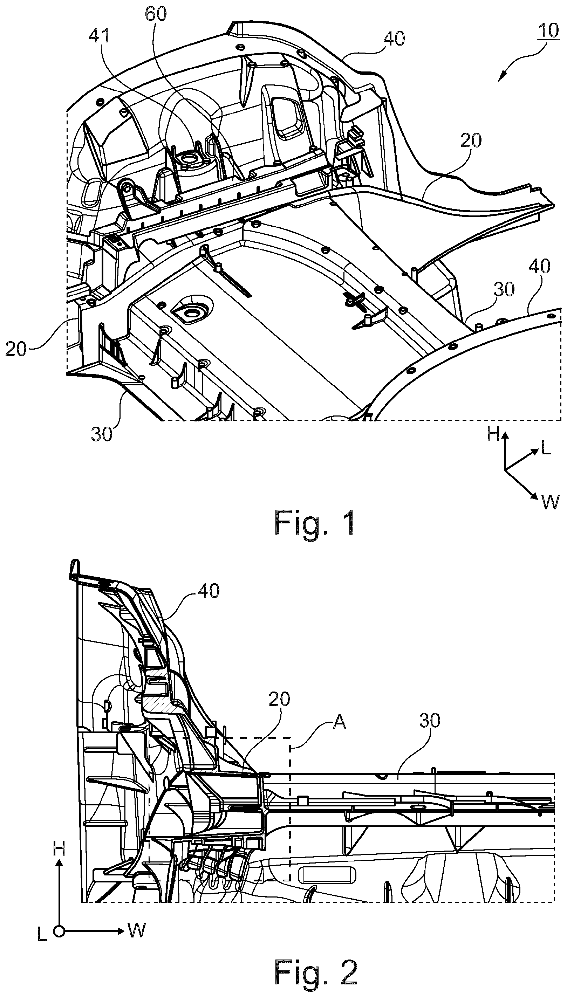

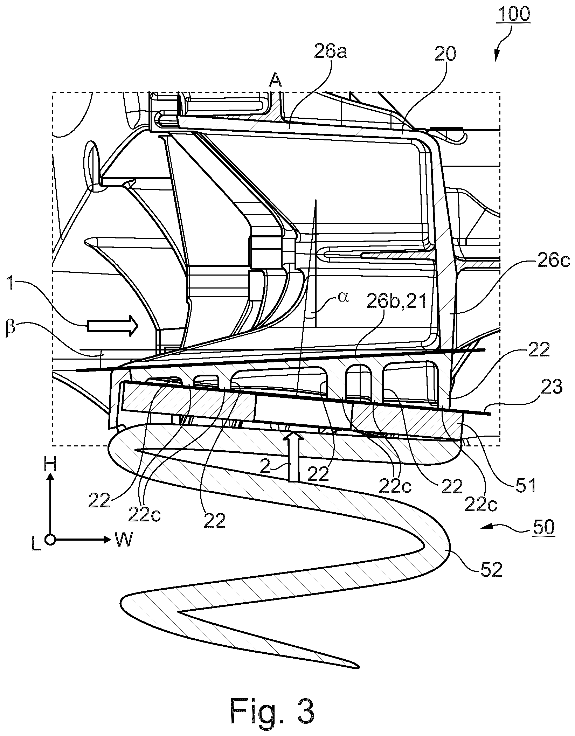

Figure 1 shows a perspective partial view on a rear part structure 10 for a vehicle body of a vehicle 100 (as indicated in Fig. 3). The rear part structure 10 comprises a base portion 30 and two wheelhouse portions 40, which are located opposite of one another and are arranged for partially housing a wheel therein. The base portion 30 extends in between the two wheelhouse portions 40.

The wheelhouse portion 40 may comprise support members, which are supporting a floor support structure 60 thereon, which in turn may be used for supporting a luggage compartment floor thereon (not shown). Further, the wheelhouse portions 40 may comprise shock absorber segments 41 for receiving a shock absorber (not shown).

The rear part structure 10 further comprises side members 20 extending in length L along a longitudinal axis L in the example of Fig. 1 with or in parallel to the wheelhouse portions 40 and/or with the base portion 30 towards the front of a vehicle 100 comprising a vehicle body with the rear part structure 10 and any further structures forming the overall vehicle body (due to the partial view of Fig. 1, one of the side members 20 at one of the two wheelhouse portions 40 is not shown).

Fig. 1 further shows a coordinate system that generally comprises a longitudinal axis L, a height axis H, and a width axis W, along which at least the two side member portions 20 may extend with their length L, height H, and width W, respectively. Generally, the axes L, H, W may also correspond to or indicate the length L, height H, and width W of the rear part structure 10 and/or the vehicle 100 or vehicle body, in which the rear part structure 10 is being used. Specifically, the length L, height H, and width W of the side member portions 20 may generally extend respectively in length L, height H, and width W with the vehicle 100 or vehicle body.

Figure 2 shows a front partial view on the rear part structure 10 of Fig. 1. In Fig. 2, only one of the two side member portions 20 is shown since the rear part structure 10 is only shown partially in terms of a left part thereof. The overall cross-section of the side member portion 20 may be seen, which may be rectangular, or square. Specifically, the side member portions 20 may be configured as beams or rails. These beams or rails may extend inside the rear part structure 10 for connection to vehicle body structures closer to the front of the vehicle 100 or vehicle body.

Figure 3 shows a closer view on the detail A of Fig. 2 showing the rear part structure 10 with the side member portion 20 and as part of the vehicle 100, which is only shown here as a small detail of the vehicle 100 in terms of its rear-part structure 100 and a coil spring unit 50 of a wheel suspension.

The side member portion 20 is shown exemplary in Fig. 3 with three side member walls 26a, 26b, 26c together forming a C-shaped cross-section or generally a rectangular cross-section with an open side from which a horizontal die tool is inserted and retracted to form the side member portion 20 during die casting of the rear part structure 10.

Specifically, in this example of the rear part structure 10, the wheelhouse portions 40, the base portion 30 and the side members 20 are integrally formed with one another in a die casting process. The die casting processes may use horizontal and vertical die tools. One or more horizontal die tools are inserted in the horizontal direction 1 and one or more vertical die tools are inserted in the vertical direction 2 indicated in Fig. 3 and substantially corresponding to the width axis W and height axis H, respectively.

Due to the die casting process, the horizontal die tool or tools leave two opposite side side member walls 26a, 26b of the side member portion 20 with a draft angle β, which may for example be in the range of 1° to 4°, e.g. about 3°. In other words, the opposite side member walls 26a, 26b are slanted in relation to the width axis W instead of being parallel thereto or generally straight.

However, when using the bottom side member wall 26b for supporting a coil spring unit 50 thereat, the draft angle β of the bottom side member wall 26b has the disadvantage that the bottom side member wall 26b is thereby slanted or angled opposite to an advantageous angle of a spring seat surface for the coil spring unit 50.

For this purpose, the bottom side wall 26b is provided with a first segment 21 comprising first ribs 22 extending with varying height H at least along the width W of the side member portion 20 such that the ends or end faces 22c of the first ribs 22 form a spring seat plane 23 for the coil spring unit 50. Specifically, the height variation is provided such that the spring seat plane 23 is angled in relation to the extension in height H of the first ribs 22 or generally of the side member portion 20 or the rear part structure 10.

In this example, the spring seat plane 23 is angled with an angle α of 6° in relation to the height H, thereby providing an advantageous angle on the spring seat plane 23 for optimal arrangement or attachment of the coil spring unit 50 with a spring seat 51 and coil spring 52 thereat.

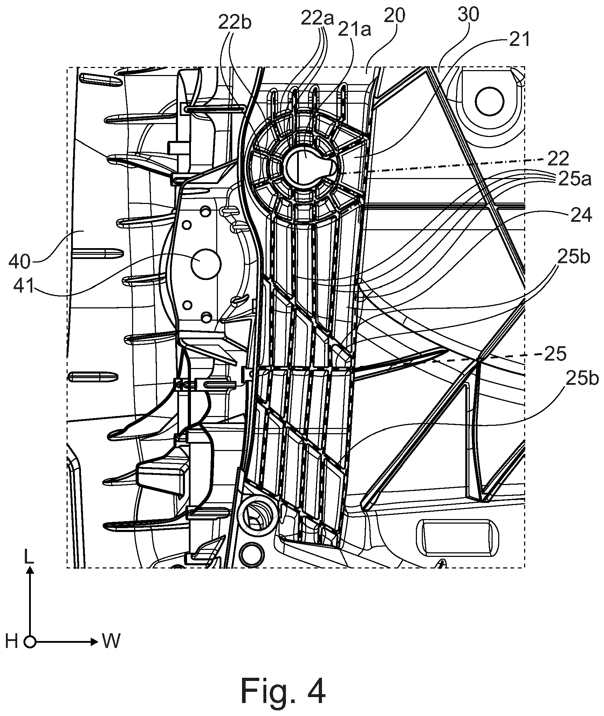

Figure 4 shows a bottom view on the side member portion 20 of the rear part structure 10 seen in Fig. 3. Here, it may be seen that the first segment 21 is generally a substantially round or circular segment with a corresponding surface, on which the ribs 22 are arranged. Specifically, the ribs 22 are arranged around a center 21a of the first segment 21. Some of the ribs 22 are circumferential ribs 22a or concentric ribs, which extend circumferentially or concentrically around or about the center 21a of the first segment 21. Other ribs 22 are radial ribs 22b, which extend radially between the circumferential ribs 22a and the center 21 of the first segment 21.

Further, the side member portion 20 at a bottom of the bottom side wall 26b comprises a second segment 24, which in this example is larger than the first segment 21. The second segment 24 comprises second ribs 25, which may be configured as reinforcement or load transferring ribs. Some of the second ribs 25 may be longitudinal ribs 25a extending predominantly or substantially in length along the longitudinal axis L. Other second ribs 25 may be transverse ribs 25b extending substantially or predominantly transverse to the longitudinal axis L and in between the longitudinal ribs 25a for further reinforcement.

The rear part structure 10 may accordingly comprises rib patterns with ribs 22, 25 on the bottom side of the bottom side wall 26b of its side member portions 20. These rib patterns may be customized to follow the motion of adjacent parts using all available space where the size of the side member portions 20 is important and needed. The rib pattern with the ends 22c of the first ribs 22 may provide a flat spring seat plane for the spring seat 51. This creates a weight efficient, castable and stiff surface that is also very good for casting as the ribs 22, 25 help the flow of the aluminum or any other metal material used in the casting process to travel rearwards. Thereby, the presented solution avoids a thick uniform bottom surface, which would result in a lot of unnecessary weight, or changing the overall design but at the cost of lesser efficient overall behavior or performance of the rear part structure 10.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. Any reference signs in the claims should not be construed as limiting the scope of the claims.

### LIST OF REFERENCE SIGNS

- 1: horizontal direction
- 2: vertical direction
- 10: rear part structure
- 20: side member portion
- 21: first segment
- 22: first ribs
- 22a: circumferential ribs
- 22b: radial ribs
- 22c: ends of the first ribs
- 23: spring seat plane
- 24: second segment
- 25: second ribs
- 26: side member walls
- 26a: top side member wall
- 26b: bottom side member wall
- 26c: lateral side member wall
- 30: base portion
- 40: wheelhouse portion
- 50: coil spring unit
- 51: spring seat
- 52: coil spring
- 60: floor support structure
- 100: vehicle
- L: longitudinal axis, length
- H: height axis, height
- W: width axis, width

## Claims

1. A rear part structure (10) for a vehicle, wherein the rear part structure (10) comprises two side member portions (20) located opposite of one another, wherein each side member portion (20) comprises a first segment (21), wherein at least one of the first segments (21) comprises first ribs (22) extending with varying height (H) along a width (W) of its side member portion (20), the ends (22c) of the first ribs (22) forming a spring seat plane (23) for a coil spring unit (50), the spring seat plane (23) being angled in relation to the extension in height (H) of the first ribs (22).

2. The rear part structure (10) of claim 1, wherein the rear part structure (10) further comprises a base portion (30) and two wheelhouse portions (40) for partially housing a wheel therein, wherein the base portion (30) extends along the width (W) of the side member portions (20) and between the two wheelhouse portions (40), and wherein the side member portions (20) extend in length (L) transverse to the extension of the base portion (30) between the two wheelhouse portions (40).

3. The rear part structure (10) of claim 2, wherein the height (H) of the first ribs (22) increases along the width (W) of its side member portion (20) and in a direction from an adjacent wheelhouse portion (40) to an opposite wheelhouse portion (40) of the two wheelhouse portions (40).

4. The rear part structure (10) of any one of the previous claims, wherein the height (H₂₂) of the first ribs (22) constantly increases along the width (W) of its side member portion (20).

5. The rear part structure (10) of any one of the previous claims, wherein the first ribs (22) comprise circumferential ribs (22a) extending circumferentially around a center (21a) of the first segment (21) and radial ribs (22b) extending radially between the circumferential ribs (22a) and the center (21a).

6. The rear part structure (10) of any one of the previous claims, wherein each side member portion (20) further comprises a second segment (24), wherein at least one second segment (24) comprises second ribs (25) extending at least along a length (L) of its side member portion (20).

7. The rear part structure (10) of claim 6, wherein the first segment (21) and the second segment (24) are located on a bottom side of the side member portions (20) and the second ribs (25) are connected to the first ribs (21).

8. The rear part structure (10) of claim 6 or 7, wherein the second ribs (25) comprise longitudinal ribs (25a) extending predominantly along the length (L) of the side member portion (20) and transverse ribs (25b) extending predominantly transverse to the length (L) of the side member portion (20) and in between the longitudinal ribs (25a).

9. The rear part structure (10) of any one of the previous claims, wherein the spring seat plane (23) is angled with an angle (α) in the range of 2° to 10° in relation to the extension in height (H) of the first ribs (22).

10. The rear part structure (10) of any one of the previous claims, wherein the side member portions (20) comprises three side member walls (26) forming a rectangular cross-section with an open side.

11. The rear part structure (10) of claim 9, wherein two opposite side member walls (26a, 26b) of the side member walls (26) comprise a draft angle (β).

12. The rear part structure (10) of claim 9 or 10, wherein one of the two opposite side member walls (26a, 26b) comprises the first segment (21) with the first ribs (22) arranged thereon.

13. The rear part structure (10) of any one of the previous claims, wherein the coil spring unit (50) comprises a spring seat (51) and a coil spring (52), wherein the spring seat (51) is arranged at the spring seat plane (23).

14. The rear part structure (10) of any one of the previous claims, wherein the rear part structure (10) is a monolithically casted structure.

15. A vehicle (100) comprising the rear part structure (10) of any one of the previous claims and at least one coil spring unit (50) arranged at the at least one spring seat plane (23).
